# EUROPÄISCHE PATENTSCHRIFT

(11) **EP 4 514 629 B1**
(45) Veröffentlichungstag und Bekanntmachung des Hinweises auf die Patenterteilung: **09.12.2026**
(21) Anmeldenummer: 23712796.4
(22) Anmeldetag: 10.03.2023
(51) Int. Cl.: B60C 11/03, B60C 11/12, B60C 11/13, B60C 11/04

(54) **FAHRZEUGLUFTREIFEN**
PNEUMATIC TYRE FOR A VEHICLE
PNEUMATIQUE POUR VÉHICULE

(30) Priorität: 29.04.2022 DE 102022204225
(43) Veröffentlichungstag der Anmeldung: 05.03.2025
(73) Patentinhaber: Continental Reifen Deutschland GmbH, 30175 Hannover (DE)
(72) Erfinder: KHOO, Jan-Sen, 30175 Hannover (DE); HERBST, Stephan, 30175 Hannover (DE); BEHR, Ulrich, 30175 Hannover (DE)
(74) Vertreter: Continental Corporation
(86) Internationale Anmeldenummer: PCT/DE2023/200051
(87) Internationale Veröffentlichungsnummer: WO 2023/208295

(56) Entgegenhaltungen:
- WO-A1-2015/033818
- WO-A1-2015/182153
- WO-A1-2017/099127
- WO-A1-2023/069066
- WO-A1-2023/069067
- DE-A1- 102018 119 892
- KR-B1- 101 799 117
- US-A1- 2015 151 584
- US-A1- 2018 257 437
- US-A1- 2019 359 002
- US-A1- 2019 381 836
- US-A1- 2021 094 357

## Beschreibung

Die Erfindung betrifft einen Fahrzeugluftreifen mit einem Laufstreifen und Seitenwänden, wobei der Laufstreifen zumindest eine schulterseitige Profilrippe mit einem innerhalb der Bodenaufstandsfläche befindlichen Innenabschnitt und einem außerhalb der Bodenaufstandsfläche befindlichen Schulterabschnitt mit einer an den seitlichen Rand der Bodenaufstandsfläche angrenzenden Hälfte und einer an die Seitenwand angrenzenden Hälfte aufweist, wobei im Schulterabschnitt in Umfangsrichtung aufeinanderfolgende, über ihren Verlauf langgezogene Vertiefungen ausgebildet sind.

Ein derartiger Fahrzeugluftreifen ist beispielsweise aus der
DE 10 2018 119 892 A1 bekannt. Der Fahrzeugluftreifen weist einen Laufstreifen mit zwei mittleren Profilrippen und zwei schulterseitigen Profilrippen auf, wobei die Profilrippen durch Umfangsrillen voneinander getrennt sind. Die mittleren Profilrippen sind mit in die Umfangsrillen einmündenden Sackrillen versehen, welchen jeweils einseitig in der mittleren Profilrippe endende Einschnitte gegenüberliegen. Die schulterseitigen Profilrippen sind durch Querrillen in Profilblöcke strukturiert, wobei jeder Profilblock im außerhalb der Bodenaufstandsfläche befindlichen Schulterabschnitt der Profilrippe mit quer zur Umfangsrichtung verlaufenden einschnittartigen Vertiefungen versehen ist. Der Reifen soll eine gute Lenkstabilität auf vereisten und verschneiten Fahrbahnen ermöglichen und ein gleichmäßiges Abriebverhalten im Bereich der mittleren Profilrippen aufweisen.

Auch die US 2019/381836 A1 offenbart einen Fahrzeugluftreifen mit einem Laufstreifen.

Es ist grundsätzlich bekannt, dass im Schulterabschnitt von schulterseitigen Profilrippen von Laufstreifen (sogenannter Off-Shoulder-Bereich) ausgebildete Vertiefungen zur Verbesserung des Traktionsverhaltens beim Fahren auf weichen Untergründen, insbesondere auf Schnee, Schneematsch oder Schlamm, beitragen können. Die bisher bekannten Vertiefungen sind in dieser Hinsicht jedoch weiter verbesserungsbedürftig.

Der Erfindung liegt daher die Aufgabe zugrunde, bei einem Fahrzeugluftreifen der eingangs genannten Art, das Traktionsverhalten beim Fahren auf weichen Untergründen zu verbessern.

Gelöst wird die gestellte Aufgabe erfindungsgemäß dadurch, dass die Vertiefungen in der an die Seitenwand angrenzenden Hälfte des Schulterabschnittes ausgebildet sind, in Draufsicht betrachtet, V-förmig verlaufen und jeweils eine zum seitlichen Rand der Bodenaufstandsfläche weisende V-Spitze sowie zwei je einen V-Schenkel bildende, miteinander einen Winkel von 30° bis 50° einschließende Vertiefungsabschnitte aufweisen, wobei die Vertiefungen eine Breite von 0,30 mm bis 1,20 mm und die Vertiefungsabschnitte eine quer zur Umfangsrichtung gemessene Länge von 3,0 mm bis 7,5 mm aufweisen.

Die Vertiefungen befinden sich daher nahe der Seitenwand und treten beim Fahren auf weichen Untergründen mit diesen in Kontakt. Durch den V-förmigen Verlauf sowie die gewählte Dimensionierung der Vertiefungen sind die von den Vertiefungen am Niveau der Außenfläche des Schulterabschnittes zur Verfügung gestellten Griffkanten besonders vorteilhaft orientiert und gegeneinander stabilisiert, sodass diese das Traktionsverhalten auf weichen Untergründen deutlich verbessern. Durch den V-förmigen Verlauf wirken die Griffkanten der Vertiefungen - im Gegensatz zu den bekannten quer zur Umfangsrichtung verlaufenden einschnittartigen Vertiefungen - insbesondere auch verstärkt unter Querbelastung, sodass das Traktionsverhalten auf weichen Untergründen auch beim Fahren von Kurven deutlich verbessert ist.

Gemäß einer bevorzugten Ausführung der Erfindung weisen die Vertiefungen eine Tiefe von 0,30 mm bis 1,20 mm, insbesondere von 0,40 mm bis 1,00 mm, und bevorzugt von bis zu 0,80 mm, auf. Dadurch sind die von den Vertiefungen zur Verfügung gestellten Griffkanten gut ausgeprägt, verbiegen sich daher unter Belastung nicht oder kaum, wodurch das Traktionsverhalten auf weichen Untergründen weiter verbessert ist.

Bevorzugter Weise sind die Vertiefungen komplett innerhalb eines an die Seitenwand angrenzenden, außenseitigen Drittels der Schulterabschnittes ausgebildet. Dies trägt zu einer hohen Effektivität der von den Vertiefungen zur Verfügung gestellten Griffkanten bei.

Gemäß einer weiteren bevorzugten Ausführung der Erfindung sind die Vertiefungsabschnitte jeder Vertiefung, in Draufsicht betrachtet, bezüglich der Umfangsrichtung gegensinnig zueinander geneigt. Dies ist insbesondere für das Traktionsverhalten auf weichen Untergründen bei gleichzeitig auftretender Querbelastung von besonderem Vorteil, da sich die von den Vertiefungsabschnitten zur Verfügung gestellten Kanten quer zur Umfangsrichtung nicht "verschatten".

Gemäß einer weiteren bevorzugten Ausführung der Erfindung verlaufen die Vertiefungsabschnitte jeder Vertiefung, in Draufsicht betrachtet, bogenförmig sowie bikonvex zueinander gewölbt. Solche Vertiefungsabschnitte stützen sich besonders wirksam gegeneinander ab, tragen derart zu einer Versteifung der zur Verfügung gestellten Griffkanten und somit zu einer weiteren Verbesserung des Traktionsverhaltens auf weichen Untergründen bei.

Eine vorteilhafte Weiterbildung der letztgenannten Ausführung der Erfindung ist dadurch gekennzeichnet, dass jede Vertiefung eine ihrem Verlauf folgende Mittellinie und die bogenförmig verlaufenden Vertiefungsabschnitte jeweils einen bogenförmig verlaufenden Mittellinienabschnitt der Mittellinie der Vertiefung aufweisen, wobei die Vertiefungsabschnitte jeweils eine maximale Auslenkung von 0,30 mm bis 1,00 mm, insbesondere von 0,40 mm bis 0,80 mm, aufweisen, wobei die maximale Auslenkung zwischen dem Mittellinienabschnitt und einer zwischen den Enden des Mittellinienabschnittes gerade verlaufenden Hilfslinie sowie senkrecht zur Hilfslinie ermittelt ist. Diese Weiterbildung spezifiziert die Bogenform der Vertiefungsabschnitte und trägt ebenfalls zur Effektivität der von den Vertiefungen zur Verfügung gestellten Griffkanten bei.

Eine weitere bevorzugte Ausführung der Erfindung ist dadurch gekennzeichnet, dass der Winkel, welchen die zwei je einen V-Schenkel bildenden Vertiefungsabschnitte miteinander einschließen, 35° bis 45°, insbesondere 37° bis 43°, beträgt.

Ferner ist es günstig, wenn die Breite der Vertiefungen 0,40 mm bis 0,80 mm beträgt.

Darüber hinaus ist es vorteilhaft, wenn die quer zur Umfangsrichtung gemessene Länge der Vertiefungsabschnitte 5,0 mm bis 7,0 mm beträgt.

Außerdem ist es bevorzugt, wenn die Vertiefungsabschnitte zur Seitenwand jeweils einen quer zur Umfangsrichtung ermittelten Abstand von 1,0 mm bis 3,0 mm aufweisen.

Gemäß einer weiteren bevorzugten Ausführung der Erfindung weisen die Vertiefungen am Niveau der Außenfläche des Schulterabschnittes voneinander in Umfangsrichtung als kleinstmögliche Abstände ermittelte Abstände von 3,0 mm bis 5,0 mm auf, wobei die Vertiefungen über den gesamten Laufstreifenumfang verteilt ausgebildet sind. Die Anzahl der Vertiefungen ist daher entsprechend auf den Laufstreifenumfang abgestimmt, was sich ebenfalls vorteilhaft auf die Traktionseigenschaften auf weichen Untergründen auswirkt.

Gemäß einer alternativen bevorzugten Ausführung der Erfindung ist die schulterseitige Profilrippe mit Querrillen versehen, welche in den Bereich zwischen in Umfangsrichtung aufeinanderfolgenden Vertiefungen hineinverlaufen, wobei am der Seitenwand zugewandten Ende jeder Querrille in der an die Seitenwand angrenzenden Hälfte des Schulterabschnittes, insbesondere in dem an die Seitenwand angrenzenden Drittel des Schulterabschnittes, eine in die Querrille hineinragende dreieckförmige Erhebung mit einer in Richtung zum seitlichen Rand der Bodenaufstandsfläche weisenden, insbesondere verrundeten Dreieckspitze ausgebildet ist, wobei die dreieckförmige Erhebung von der Außenfläche des Schulterabschnittes mitbegrenzt ist und der Querrille zwei dreieckförmige Endabschnitte verleiht, welche - jeweils ermittelt am Niveau der Außenfläche des Schulterabschnittes und bezogen auf die Dreieckspitze - in Umfangsrichtung eine Breite von 2,5 mm bis 3,5 mm und quer zur Umfangsrichtung eine Länge von 3,0 mm bis 7,5 mm, insbesondere von 5,0 mm bis 7,0 mm, aufweisen. Die dreieckförmigen Erhebungen verleihen den Querrillen ein zu den Vertiefungen geometrisch ähnliches Rillenende und stellen am Niveau der Außenfläche des Schulterabschnittes weitere Griffkanten zur Verfügung, deren Wirkungsweise zu den von den Vertiefungen zur Verfügung gestellten Griffkanten ähnlich ist. Die dreieckförmigen Erhebungen sind daher eine besonders vorteilhafte Ergänzung zu den Vertiefungen und tragen somit zu einer weiteren Verbesserung des Traktionsverhaltens auf weichen Untergründen bei.

Bei der letztgenannten Ausführung der Erfindung ist es vorteilhaft, wenn die dreieckförmige Erhebung zwei V-förmig zueinander verlaufende Begrenzungsflächen mit je einer gerade oder bogenförmig verlaufenden Begrenzungskante an der Außenfläche des Schulterabschnittes aufweist, wobei die Begrenzungskanten bezüglich der Umfangsrichtung gegensinnig zueinander geneigt sind und miteinander einen Winkel von 35° bis 55°, insbesondere von 40° bis 50°, einschließen.

Ferner ist es bei der letztgenannten Ausführung der Erfindung von Vorteil, wenn zwischen in Umfangsrichtung aufeinanderfolgenden Querrillen jeweils eine einzige Vertiefung ausgebildet ist, welche zu den Querrillen einen in Umfangsrichtung als kleinstmöglichen Abstand ermittelten Abstand von insbesondere 3,0 mm bis 5,0 mm aufweist.

Eine weitere bevorzugte Ausführung der Erfindung ist dadurch gekennzeichnet, dass die Breite der Vertiefungen 0,40 mm bis 1,00 mm beträgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt einer schulterseitigen Profilrippe eines in die Ebene abgewickelten Laufstreifens eines Fahrzeugluftreifens mit einer Ausführungsvariante der Erfindung,
Fig. 2 einen Schnitt entlang der Linie II-II der Fig. 1,
Fig. 3 einen Schnitt entlang der Linie III-III der Fig. 1,
Fig. 4 einen Schnitt entlang der Linie IV- IV der Fig. 1,
Fig. 5 eine vergrößerte Draufsicht auf das Detail Z₅ der Fig. 1,
Fig. 6 einen Schnitt entlang der Linie VI-VI der Fig. 5 und
Fig. 7 eine Ansicht gemäß der in Fig. 5 durch den Pfeil S₇ angedeuteten Sichtrichtung unter Berücksichtigung der Reifenkrümmung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t).

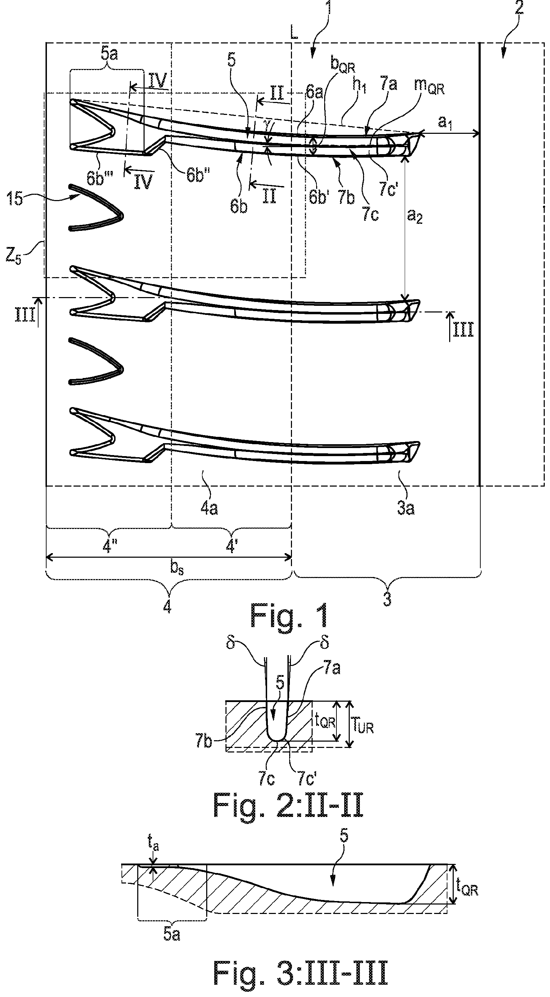

Fig. 1 zeigt eine Draufsicht auf einen Umfangsabschnitt einer schulterseitigen Profilrippe 1 eines Laufstreifens eines Fahrzeugluftreifens. Der seitliche Rand der Bodenaufstandsfläche des Laufstreifens ist durch eine gestrichelte Linie L gekennzeichnet, wobei die Bodenaufstandsfläche dem statisch ermittelten Footprint gemäß E.T.R.T.O.-Standards entspricht (Last bei 70% der maximalen Tragfähigkeit bei einem Innendruck von 85% nach E.T.R.T.O.-Norm). Der Laufstreifen weist in seiner zweiten, nicht gezeigten Schulter eine weitere schulterseitige Profilrippe auf, deren Ausgestaltung der Erfindung von jener der schulterseitigen Profilrippe 1 vorzugsweise abweicht, sodass der Laufstreifen bezüglich der Reifenäquatorialebene eine asymmetrische Gestalt aufweist.

Die schulterseitige Profilrippe 1 ist laufstreifeninnenseitig von einer beim gezeigten Ausführungsbeispiel der Erfindung in Draufsicht gerade verlaufenden, schulterseitigen Umfangsrille 2 begrenzt, welche in radialer Richtung auf die jeweils vorgesehene Profiltiefe T_{UR} (angedeutet in Fig. 2), die für den bevorzugten Reifentyp üblicherweise 6,5 mm bis 13,0 mm beträgt, ausgeführt ist.

Die schulterseitige Profilrippe 1 weist einen innerhalb der Bodenaufstandsfläche befindlichen Innenabschnitt 3 mit einer in der Laufstreifenperipherie liegenden Außenfläche 3a und einen außerhalb der Bodenaufstandsfläche befindlichen, zur nicht gezeigten Seitenwand verlaufenden Schulterabschnitt 4 mit einer in der Laufstreifenperipherie liegenden, tangential an die Außenfläche 3a anschließenden Außenfläche 4a auf und ist über ihre Umfangserstreckung mit einer Vielzahl von innerhalb der schulterseitigen Profilrippe 1 endenden Querrillen 5 versehen.

Der Schulterabschnitt 4 weist am Niveau der Außenfläche 4a eine quer zur Umfangsrichtung gemessene Breite bs auf und ist von einer an den seitlichen Rand der Bodenaufstandsfläche (Linie L) angrenzenden Hälfte 4' und einer an die Seitenwand angrenzenden Hälfte 4" gebildet. Die "Teilung" des Schulterabschnittes 4 in die Hälften 4', 4" bezieht sich daher auf die Breite bs.

Die Querrillen 5 verlaufen, in Draufsicht betrachtet, bogenförmig (durchgehend gebogen) sowie jeweils abschnittsweise im Innenabschnitt 3 und abschnittsweise im Schulterabschnitt 4 und enden vor der schulterseitigen Umfangsrille 2 in einem an der Außenfläche 3a in axialer Richtung ermittelten Abstand a₁ von 4,0 mm von 15,0 mm und weisen eine knickfrei verlaufende, bogeninnenseitige Rillenkante 6a und eine zweifach geknickt verlaufende Rillenkante 6b auf, wobei die Rillenkanten 6a, 6b jeweils abschnittsweise auf der Außenfläche 3a und abschnittsweise auf der Außenfläche 4a verlaufen. Eine die Enden der bogenaußenseitigen Rillenkante 6a verbindende, gerade verlaufende Hilfslinie h₁ verläuft komplett außerhalb der Querrille 5.

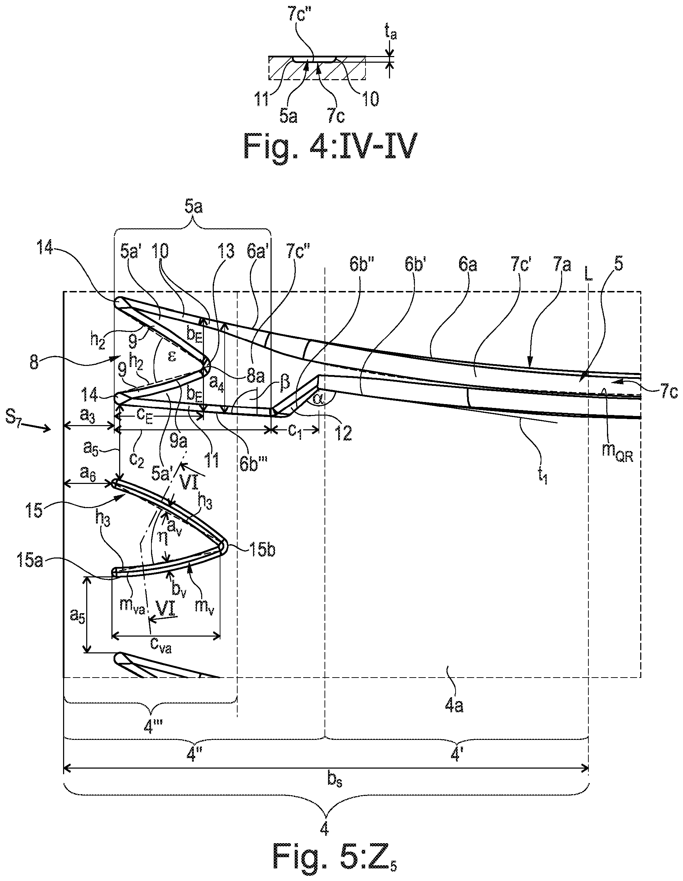

Die weiteren Erläuterungen zur geknickt verlaufenden Rillenkante 6b beziehen sich auf die Draufsicht. Die Rillenkante 6b setzt sich aus einem abschnittsweise an der Außenfläche 3a und abschnittsweise an der Außenfläche 4a verlaufenden, innenseitigen Kantenabschnitt 6b', einem an der Außenfläche 4a verlaufenden, mittleren Kantenabschnitt 6b" und einem an der Außenfläche 4a sowie in der Hälfte 4" verlaufenden, außenseitigen Kantenabschnitt 6b‴ zusammen. Der innenseitige Kantenabschnitt 6b' verläuft bogenförmig, wobei die Krümmungsrichtung mit jener der bogeninnenseitigen Rillenkante 6a übereinstimmt. Wie Fig. 5 zeigt, verläuft der mittlere Kantenabschnitt 6b" ausgehend vom innenseitigen Kantenabschnitt 6b' über den Großteil seiner Erstreckung gerade und weist eine in Fig. 5 nicht bezifferte, an den außenseitigen Kantenabschnitt 6b‴ anschließende Übergangsrundung auf. Der mittlere Kantenabschnitt 6b" schließt mit dem innenseitigen Kantenabschnitt 6b' einen außerhalb der Querrille 5 liegenden Winkel α von 120° bis 150° ein, wobei sich der Winkel α auf eine an den innenseitigen Kantenabschnitt 6b' angelegte, durch den gegenseitigen Anschluss der Kantenabschnitte 6b', 6b" verlaufende Tangente t₁ bezieht. Der mittlere Kantenabschnitt 6b" weist ferner eine am Niveau der Außenfläche 4a sowie quer zur Umfangsrichtung ermittelte Länge c₁ von 1,5 mm bis 3,0 mm auf. Der außenseitige Kantenabschnitt 6b‴ verläuft gerade oder kaum merkbar bogenförmig (durchgehend gebogen) sowie zur Umfangsrichtung unter einem Winkel β von bis zu 90° ± 7°, insbesondere von bis zu 90° ± 5°. Bei bogenförmig verlaufendem, außenseitigen Kantenabschnitt 6b‴ bezieht sich der Winkel β auf eine die Enden des außenseitigen Kantenabschnittes 6b‴ verbindende, in Draufsicht gerade verlaufende Hilfslinie.

Gemäß Fig. 1 weisen die Querrillen 5, in Draufsicht betrachtet, jeweils eine dem Rillenverlauf folgende, bogenförmig verlaufende Rillenmittellinie m_{QR} (vergl. Fig. 5) auf, welche zur bogeninnenseitigen Rillenkante 6a und dem innenseitigen Kantenabschnitt 6b' der bogenaußenseitigen Rillenkante 6b übereinstimmende Abstände aufweist. Die Querrillen 5 verlaufen - bezogen auf die Rillenmittellinien m_{QR} - zur axialen Richtung unter einem Winkel γ von 0° bis 20°, insbesondere von bis zu 15°, besonders bevorzugt von bis zu 7°, sowie vorzugsweise parallel zueinander. Der Winkel γ bezieht sich jeweils auf eine lokal an die Rillenmittellinie m_{QR} angelegte Tangente (nicht gezeigt). In Umfangsrichtung unmittelbar aufeinanderfolgende Querrillen 5 weisen voneinander an der Außenfläche 3a in Umfangsrichtung als kleinstmögliche Abstände ermittelte Abstände a₂ von vorzugsweise 15,0 mm von 35,0 mm auf.

Die weitere Ausgestaltung der Querrillen 5 wird nachfolgend anhand einer einzelnen Querrille 5 erläutert.

Wie Fig. 1 ferner zeigt, ist die Querrille 5 durch eine von der bogeninnenseitigen Rillenkante 6a ausgehende Rillenflanke 7a, eine von der geknickt verlaufenden Rillenkante 6b ausgehende Rillenflanke 7b und einen Rillengrund 7c begrenzt. Die Rillenflanken 7a, 7b verlaufen, im in Draufsicht senkrecht zu den Rillenkanten 6a, 6b ausgerichteten Querschnitt betrachtet, zur radialen Richtung jeweils unter einem Winkel δ (Fig. 2, vergl. Lage der Linie II-II in Fig. 1) von 0° bis 5°. Der Rillengrund 7c weist zu den Rillenflanken 7a, 7b jeweils eine Rillengrundrundung 7c' auf, welche, im erwähnten Querschnitt betrachtet, knickfrei an die Rillenflanke 7a bzw. 7b anschließt (Fig. 2).

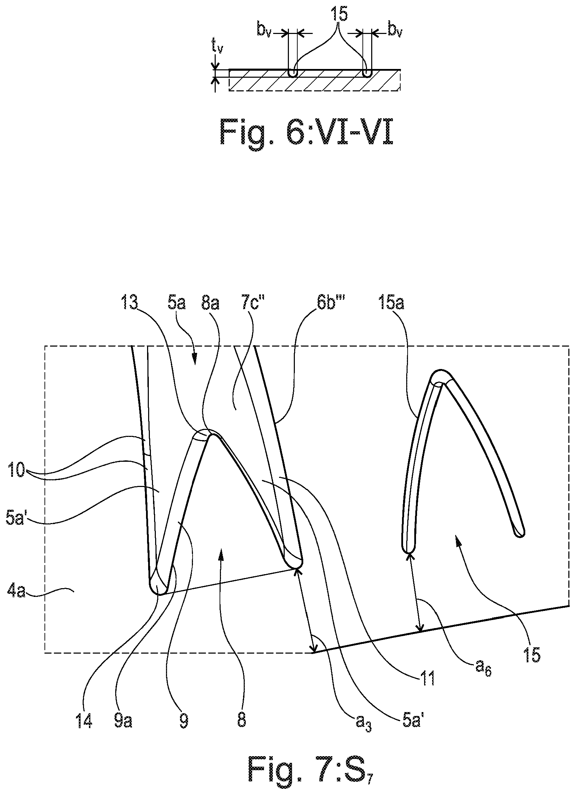

Die Querrille 5 weist in radialer Richtung eine maximale Tiefe t_{QR} (Fig. 2, Fig. 3) von 70% bis 100% der Profiltiefe T_{UR} (Fig. 2) und eine als kleinstmöglicher Abstand zwischen der bogenaußenseitigen Rillenkante 6a und dem innenseitigen Kantenabschnitt 6b' der Rillenkante 6b ermittelte Breite b_{QR} von 3,0 mm bis 6,0 mm auf. Die Breite b_{QR} liegt daher auch im Bereich des Innenabschnitt 3 vor. Die Querrille 5 wird zu ihrem in der Hälfte 4" liegenden Ende in an sich bekannter Weise seichter (Fig. 3) und weist einen zumindest großteils, beim Ausführungsbeispiel komplett, in der Hälfte 4" liegenden, als seichte Vertiefung ausgebildeten Auslaufabschnitt 5a (vergl. Fig. 7) auf. Die Erstreckung des Auslaufabschnittes 5a quer zur Umfangsrichtung ist durch den außenseitigen Kantenabschnitt 6b‴definiert, sodass der Auslaufabschnitt 5a in Richtung Laufstreifeninnseite gemeinsam mit dem außenseitigen Kantenabschnitt 6b‴ endet (vergl. Fig. 5).

Der Auslaufabschnitt 5a weist - jeweils ermittelt am Niveau der Außenfläche 4a - zur nicht gezeigten Seitenwand einen quer zur Umfangsrichtung ermittelten Abstand a₃ (Fig. 5, Fig. 7) von 1,0 mm bis 3,0 mm, eine quer zur Umfangsrichtung ermittelte, auf das dem seitlichen Rand der Bodenaufstandsfläche (Linie L) nächstliegende Ende des außenseitigen Kantenabschnittes 6b‴ bezogene Länge c₂ (Fig. 5) von 10,0 mm bis 15,0 mm und eine senkrecht zum Niveau der Außenfläche 4a ermittelte Tiefe tₐ (Fig. 3, Fig. 4) von 0,30 mm bis 1,50 mm, insbesondere von bis zu 1,00 mm, auf, wobei die Tiefe tₐ zumindest über einen Bereich des Auslaufabschnittes 5a in Richtung zum seitlichen Rand der Bodenaufstandsfläche kontinuierlich zunimmt (Fig. 3).

Gemäß Fig. 5 und Fig. 7 ist am der Seitenwand zugewandten Ende der Auslaufabschnittes 5a eine in diesen hineinragende, dreieckförmige Erhebung 8 ausgebildet, welche komplett innerhalb der Hälfte 4" (Fig. 5), beim Ausführungsbeispiel komplett innerhalb eines an die Seitenwand angrenzenden, außenseitigen Drittels 4‴ (Fig. 5) der Schulterabschnittes 4, liegt. Das außenseitige Drittel 4‴ (Fig. 5) erstreckt sich quer zur Umfangsrichtung über ein Drittel der Breite bₛ des Schulterabschnitts 4. Die Erhebung 8 ist von der Außenfläche 4a mitbegrenzt, weist eine in Richtung zum seitlichen Rand der Bodenaufstandsfläche (Fig. 5: Linie L) in den Auslaufabschnitt 5a hineinragende, beim Ausführungsbeispiel verrundete Dreieckspitze 8a auf und verleiht dem Auslaufabschnitt 5a zwei in Draufsicht dreieckförmige Endabschnitte 5a' mit jeweils einer an der Erhebung 8 liegenden Dreieckbasis (längste Seite des Dreiecks). Der eine dreieckförmige Endabschnitt 5a' liegt an der einen Seite der Erhebung 8 und der andere dreieckförmige Endabschnitt 5a' befindet sich an der anderen Seite der Erhebung 8, sodass die dreieckförmigen Endabschnitte 5a' durch die Erhebung 8 voneinander getrennt sind.

Der Auslauflaufabschnitt 5a ist durch einen den Boden des Auslaufabschnittes 5a bildenden, in die dreieckförmigen Endabschnitte 5a' hineinragenden und an den der Seitenwand zugewandten Enden der Endabschnitte 5a' auslaufenden Rillengrundendabschnitt 7c" des Rillengrundes 7c (Fig. 5), zwei an der Erhebung 8 ausgebildete, an der Dreieckspitze 8a zusammentreffende, in Draufsicht V-förmig zueinander verlaufende Begrenzungsflächen 9 (in Fig. 7 nur eine bezeichnet), eine Seitenfläche 10, welche an einen außenseitigen Kantenabschnitt 6a' (Fig. 5) der bogeninnenseitigen Rillenkante 6a sowie an das laufstreifenaußenseitige Ende der zur Rillenflanke 7a verlaufenden Rillengrundrundung 7c' (Fig. 5) anschließt, und eine Seitenfläche 11, welche an den außenseitigen Kantenabschnitt 6b‴ anschließt und in Richtung zum seitlichen Rand der Bodenaufstandsfläche (Linie L) an einer vom mittleren Kantenabschnitt 6b" (Fig. 5) ausgehenden, zum Rillengrundendabschnitt 7c" verlaufenden Begrenzungsfläche 12 (Fig. 5) endet, begrenzt.

Gemäß Fig. 5 weisen der außenseitige Kantenabschnitt 6b‴ und der außenseitige Kantenabschnitt 6a' voneinander einen in Umfangsrichtung ermittelten Abstand a₄ von 5,0 mm bis 7,0 mm auf, wobei der Abstand a₄ in Richtung zur Seitenwand zunimmt, insbesondere fortlaufend zunimmt.

Die in Draufsicht V-förmig zueinander verlaufenden Begrenzungsflächen 9 weisen jeweils eine am Niveau der Außenfläche 4a liegende Begrenzungskante 9a auf (vergl. Fig. 7), wobei die Begrenzungskanten 9a, in Draufsicht betrachtet, kaum merkbar bogenförmig verlaufen, bezüglich zur Umfangsrichtung gegensinnig zueinander geneigt sind und miteinander einen Winkel ε von 35° bis 55°, insbesondere von 40° bis 50°, einschließen. Die Bogenform der Begrenzungskanten 9a ist derart, dass zwei gerade verlaufende Hilfslinien h₂, von welchen die eine zwischen den Enden der einen Begrenzungskante 9a und die andere zwischen den Enden der anderen Begrenzungskante 9a verläuft, auf der Erhebung 8 liegen. Der Winkel ε bezieht sich auf die Hilfslinien h₂.

Die Begrenzungsflächen 9 und die Seitenflächen 10, 11 verlaufen, im in Draufsicht senkrecht zur Begrenzungskante 9a (Begrenzungsfläche 9) bzw. senkrecht zum außenseitigen Kantenabschnitt 6b‴ (Seitenfläche 11) ausgerichteten Querschnitt betrachtet, bogenförmig (durchgehend gebogen) und schließen, im erwähnten Querschnitt betrachtet, tangential an den Rillengrundendabschnitt 7c" an (Fig. 4: gezeigt für die Seitenflächen 10, 11).

Jeder Endabschnitt 5a' weist - ermittelt am Niveau der Außenfläche 4a und bezogen auf die Dreieckspitze 8a - in Umfangsrichtung eine Breite b_{E} von 2,5 mm bis 3,5 mm und quer zur Umfangsrichtung eine Länge c_{E} von 3,0 mm bis 7,5 mm, insbesondere von 5,0 mm bis 7,0 mm, auf.

Beim gezeigten Ausführungsbeispiel ist zwischen den Begrenzungsflächen 9 eine die Dreieckspitze 8a umlaufende Übergangsrundung 13 (vergl. Fig. 7) sowie zwischen jeder Seitenfläche 10, 11 und der jeweiligen Begrenzungsfläche 9 eine Übergangsrundung 14 (vergl. Fig. 7) ausgebildet.

Gemäß Fig. 1 ist in der an die Seitenwand angrenzenden Hälfte 4", bevorzugt komplett innerhalb des außenseitigen Drittels 4‴ (Fig. 5), eine Anzahl von über den Laufstreifenumfang verteilt angeordneten, von der Außenfläche 4a ausgehenden, in Draufsicht V-förmig verlaufenden, einschnittartigen Vertiefungen 15 ausgebildet, wobei beim Ausführungsbeispiel zwischen in Umfangsrichtung aufeinanderfolgenden Querrillen 5 jeweils eine einzige Vertiefung 15 ausgebildet ist.

Die weitere Ausgestaltung der Vertiefungen 15 wird nachfolgend anhand einer einzelnen Vertiefung 15 erläutert.

Gemäß Fig. 5 weist die Vertiefung 15 zwei je einen V-Schenkel bildende Vertiefungsabschnitte 15a, eine zum seitlichen Rand der Bodenaufstandsfläche (Linie L) weisende, beim Ausführungsbeispiel von einem verrundeten V-Spitzenbereich 15b gebildete V-Spitze sowie eine ihrem Verlauf folgende Mittellinie mv auf. Die V-Spitze ist daher der am nächsten zum seitlichen Rand der Bodenaufstandsfläche (Linie L) befindliche Bereich der Vertiefung 15 und die freien Enden der V-Schenkel der Vertiefungsabschnitte 15a sind die am nächsten zur Seitenwand liegenden Bereiche der Vertiefung 15.

Die Vertiefungsabschnitte 15a verlaufen, in Draufsicht betrachtet, jeweils bogenförmig (durchgehend gebogen), weisen daher jeweils einen bogenförmig verlaufenden Mittellinienabschnitt m_{Va} auf, und sind - bezogen auf die V-Form - nach außen und somit bikonvex zueinander gewölbt. Die Vertiefungsabschnitte 15a sind daher derart ausgeführt, dass zwei gerade verlaufende Hilfslinien h₃, von welchen die eine zwischen den Enden des Mittellinienabschnittes m_{Va} des einen Vertiefungsabschnittes 15a und die andere zwischen den Enden des Mittellinienabschnittes m_{Va} des anderen Vertiefungsabschnittes 15a verläuft, innerhalb der V-Form, also im Bereich zwischen den Vertiefungsabschnitten 15a liegen. Die Vertiefungsabschnitte 15a sind bezüglich der Umfangsrichtung gegensinnig zueinander geneigt und schließen miteinander einen Winkel η von 30° bis 50°, insbesondere 35° bis 45°, bevorzugt von 37° bis 43°, ein. Die gegensinnige Neigung und der Winkel η beziehen sich jeweils auf die Hilfslinien h₃. Die Bogenform der Vertiefungsabschnitte 15a ist derart, dass jeder Vertiefungsabschnitt 15a eine senkrecht zur Hilfslinie h₃ sowie zwischen der Hilfslinie h₃ und dem Mittellinienabschnitt m_{Va} ermittelte maximale Auslenkung av von 0,30 mm bis 1,0 mm, insbesondere von 0,40 mm bis 0,80 mm, aufweist. Die maximale Auslenkung av ist der größte auf die beschriebene Weise ermittelte Abstand.

Die Vertiefung 15 weist eine senkrecht zum Niveau der Außenfläche 4a ermittelte Tiefe tv (Fig. 6) von 0,30 mm bis 1,20 mm, insbesondere von 0,40 mm bis 1,00 mm, bevorzugt von bis zu 0,80 mm, und eine am Niveau der Außenfläche 4a sowie senkrecht zur Mittellinie mv ermittelte Breite bv (vergl. Fig. 6) von 0,30 mm bis 1,20 mm, insbesondere von 0,40 mm bis 1,00 mm, auf. Die Breite bv ist senkrecht zu einer an die jeweilige Stelle der Mittellinie mv angelegten Tangente ermittelt. Jeder Vertiefungsabschnitt 15a weist eine quer zur Umfangsrichtung am Niveau der Außenfläche 4a gemessene, auf den Mittellinienabschnitt m_{Va} bezogene Länge c_{Va} von 3,0 mm bis 7,5 mm, insbesondere von 5,0 mm bis 7,0 mm, auf, wobei die Längen c_{Va} insbesondere um höchstens 1,0 mm, bevorzugt um höchstens 0,5 mm, voneinander abweichen und wobei Längen c_{Va} besonders bevorzugt übereinstimmen. Die Vertiefungsabschnitte 15a weisen ferner zu den jeweils nächstliegenden Querrillen 5 einen in Umfangsrichtung als kleinstmöglichen Abstand ermittelten Abstand as (Fig. 5) von 3,0 mm bis 5,0 mm sowie zur nicht gezeigten Seitenwand jeweils einen quer zur Umfangsrichtung ermittelten Abstand a₆ (vergl. Fig. 7) von 1,0 mm bis 3,0 mm auf.

Die Erfindung ist auf das beschriebene Ausführungsbeispiel nicht beschränkt.

Die Gestalt der Querrillen 5 kann von der beschriebenen Gestalt abweichen, wobei die Querrillen 5 insbesondere einen vom Auslaufabschnitt 5a abweichenden Auslaufabschnitt aufweisen können. Die Vertiefungsabschnitte 15a der Vertiefungen 15 können, in Draufsicht betrachtet, gerade verlaufen, sodass der Winkel η zwischen den Mittellinienabschnitten m_{Va} ermittelt ist. Ferner kann auch einer der Vertiefungsabschnitte 15a gerade und der andere bogenförmig verlaufen, sodass der Winkel η zwischen dem gerade verlaufenden Mittellinienabschnitt m_{Va} und der zwischen den Enden des bogenförmig verlaufenden Mittellinienabschnitt m_{Va} verlaufenden Hilfslinie h₃ ermittelt ist. Jeder Vertiefungsabschnitt 15a verläuft daher, in Draufsicht betrachtet, gerade oder bogenförmig (durchgehend gebogen). Außerdem können auch die an der dreieckförmigen Erhebung 8 ausgebildeten, zu den V-förmig zueinander verlaufenden Begrenzungsflächen 9 gehörenden Begrenzungskanten 9a, in Draufsicht betrachtet, gerade verlaufen, sodass der Winkel ε zwischen den Begrenzungskanten 9a ermittelt ist. Die Querrillen 5 müssen nicht bis in die an die Seitenwand angrenzenden Hälfte 4" reichen, wobei es bei dieser Ausführung bevorzugt ist, wenn eine Vielzahl von über den Laufstreifenumfang verteilt ausgebildeten Vertiefungen 15 vorgesehen sind, welche am Niveau der Außenfläche 4a in Umfangsrichtung als kleinstmögliche Abstände ermittelte Abstände von 3,0 mm bis 5,0 mm voneinander aufweisen.

### Bezugszeichenliste

- 1: schulterseitige Profilrippe
- 2: schulterseitige Umfangsrille
- 3: Innenabschnitt
- 3a: Außenfläche
- 4: Schulterabschnitt
- 4a: Außenfläche
- 4': Hälfte
- 4": Hälfte
- 4: außenseitiges Drittel
- 5: Querrille
- 5a: Auslaufabschnitt
- 5a': Endabschnitt
- 6a: Rillenkante
- 6a: außenseitiger Kantenabschnitt
- 6b: Rillenkante
- 6b: innenseitiger Kantenabschnitt
- 6b: mittlerer Kantenabschnitt
- 6b: außenseitiger Kantenabschnitt
- 7a: Rillenflanke
- 7b: Rillenflanke
- 7c: Rillengrund
- 7c': Rillengrundrundung
- 7c'': Rillengrundendabschnitt
- 8: dreieckförmige Erhebung
- 8a: Dreieckspitze
- 9: Begrenzungsfläche
- 9a: Begrenzungskante
- 10: Seitenfläche
- 11: Seitenfläche
- 12: Begrenzungsfläche
- 13: Übergangsrundung
- 14: Übergangsrundung
- 15: Vertiefung
- 15a: Vertiefungsabschnitt
- 15b: verrundeter V-Spitzenbereich
- a₁, a₂, a₃, a₄, a₅, a₆: Abstand
- a_{V}: maximale Auslenkung
- b_{E}: Breite
- b_{QR}, b_{S}, b_{V}: Breite
- c₁, c₂, c_{E}, c_{Va}: Länge
- h₁, h₂, h₃: Hilfslinie
- L: Linie (seitlicher Rand der Bodenaufstandsfläche)
- m_{QR}: Rillenmittellinie
- m_{V}: Mittellinie
- m_{Va}: Mittellinienabschnitt
- S₇: Pfeil (Sichtrichtung)
- t₁: Tangente
- tₐ: Tiefe
- t_{QR}: maximale Tiefe
- t_{V}: Tiefe
- T_{UR}: Profiltiefe
- Z₅: Detail
- α, β, γ, δ, ε, η: Winkel

## Patentansprüche

1. Fahrzeugluftreifen mit einem Laufstreifen und Seitenwänden, wobei der Laufstreifen zumindest eine schulterseitige Profilrippe (1) mit einem innerhalb der Bodenaufstandsfläche befindlichen Innenabschnitt (3) und einem außerhalb der Bodenaufstandsfläche befindlichen Schulterabschnitt (4) mit einer an den seitlichen Rand der Bodenaufstandsfläche (Linie L) angrenzenden Hälfte (4') und einer an die Seitenwand angrenzenden Hälfte (4") aufweist, wobei im Schulterabschnitt (4) in Umfangsrichtung aufeinanderfolgende, über ihren Verlauf langgezogene Vertiefungen (15) ausgebildet sind,
**dadurch gekennzeichnet,**
**dass** die Vertiefungen (15) in der an die Seitenwand angrenzenden Hälfte (4") des Schulterabschnittes (4) ausgebildet sind, in Draufsicht betrachtet, V-förmig verlaufen und jeweils eine zum seitlichen Rand der Bodenaufstandsfläche (Linie L) weisende V-Spitze sowie zwei je einen V-Schenkel bildende, miteinander einen Winkel (η) von 30° bis 50° einschließende Vertiefungsabschnitte (15a) aufweisen, wobei die Vertiefungen (15) eine Breite (bv) von 0,30 mm bis 1,20 mm und die Vertiefungsabschnitte (15a) eine quer zur Umfangsrichtung gemessene Länge (c_{Va}) von 3,0 mm bis 7,5 mm aufweisen.

2. Fahrzeugluftreifen nach Anspruch 1, **dadurch gekennzeichnet, dass** die Vertiefungen (15) eine Tiefe (tv) von 0,30 mm bis 1,20 mm, insbesondere von 0,40 mm bis 1,00 mm, und bevorzugt von bis zu 0,80 mm, aufweisen.

3. Fahrzeugluftreifen nach Anspruch 1 oder 2, **dadurch gekennzeichnet, dass** die Vertiefungen (15) komplett innerhalb eines an die Seitenwand angrenzenden, außenseitigen Drittels (4‴) der Schulterabschnittes (4) ausgebildet sind.

4. Fahrzeugluftreifen nach einem der Ansprüche 1 bis 3, **dadurch gekennzeichnet, dass** die Vertiefungsabschnitte (15a) jeder Vertiefung (15), in Draufsicht betrachtet, bezüglich der Umfangsrichtung gegensinnig zueinander geneigt sind.

5. Fahrzeugluftreifen nach einem der Ansprüche 1 bis 4, **dadurch gekennzeichnet, dass** die Vertiefungsabschnitte (15a) jeder Vertiefung (15), in Draufsicht betrachtet, bogenförmig sowie bikonvex zueinander gewölbt verlaufen.

6. Fahrzeugluftreifen nach Anspruch 5, **dadurch gekennzeichnet, dass** jede Vertiefung (15) eine ihrem Verlauf folgende Mittellinie (mv) und die bogenförmig verlaufenden Vertiefungsabschnitte (15a) jeweils einen bogenförmig verlaufenden Mittellinienabschnitt (m_{Va}) der Mittellinie (mv) der Vertiefung (15) aufweisen, wobei die Vertiefungsabschnitte (15a) jeweils eine maximale Auslenkung (av) von 0,30 mm bis 1,00 mm, insbesondere von 0,40 mm bis 0,80 mm, aufweisen, wobei die maximale Auslenkung (av) zwischen dem Mittellinienabschnitt (m_{Va}) und einer zwischen den Enden des Mittellinienabschnittes (m_{Va}) gerade verlaufenden Hilfslinie (h₃) sowie senkrecht zur Hilfslinie (h₃) ermittelt ist.

7. Fahrzeugluftreifen nach einem der Ansprüche 1 bis 6, **dadurch gekennzeichnet, dass** der Winkel (η), welchen die zwei je einen V-Schenkel bildenden Vertiefungsabschnitte (15a) miteinander einschließen, 35° bis 45°, insbesondere 37° bis 43°, beträgt.

8. Fahrzeugluftreifen nach einem der Ansprüche 1 bis 7, **dadurch gekennzeichnet, dass** die Breite (bv) der Vertiefungen (15) 0,40 mm bis 0,80 mm beträgt.

9. Fahrzeugluftreifen nach einem der Ansprüche 1 bis 8, **dadurch gekennzeichnet, dass** die quer zur Umfangsrichtung gemessene Länge (c_{Va}) der Vertiefungsabschnitte (15a) 5,0 mm bis 7,0 mm beträgt.

10. Fahrzeugluftreifen nach einem der Ansprüche 1 bis 9, **dadurch gekennzeichnet, dass** die Vertiefungsabschnitte (15a) zur Seitenwand jeweils einen quer zur Umfangsrichtung ermittelten Abstand (a₆) von 1,0 mm bis 3,0 mm aufweisen.

11. Fahrzeugluftreifen nach einem der Ansprüche 1 bis 10, **dadurch gekennzeichnet, dass** die Vertiefungen (15) am Niveau der Außenfläche (4a) des Schulterabschnittes (4) voneinander in Umfangsrichtung als kleinstmögliche Abstände ermittelte Abstände von 3,0 mm bis 5,0 mm aufweisen, wobei die Vertiefungen (15) über den gesamten Laufstreifenumfang verteilt ausgebildet sind.

12. Fahrzeugluftreifen nach einem der Ansprüche 1 bis 11, **dadurch gekennzeichnet, dass** die schulterseitige Profilrippe (1) mit Querrillen (5) versehen ist, welche in den Bereich zwischen in Umfangsrichtung aufeinanderfolgenden Vertiefungen (15) hineinverlaufen, wobei am der Seitenwand zugewandten Ende jeder Querrille (5) in der an die Seitenwand angrenzenden Hälfte (4") des Schulterabschnittes (4), insbesondere in dem an die Seitenwand angrenzenden Drittel (4‴) des Schulterabschnittes (4), eine in die Querrille (5) hineinragende dreieckförmige Erhebung (8) mit einer in Richtung zum seitlichen Rand der Bodenaufstandsfläche (Linie L) weisenden, insbesondere verrundeten Dreieckspitze (8a) ausgebildet ist, wobei die dreieckförmige Erhebung (8) von der Außenfläche (4a) des Schulterabschnittes (4) mitbegrenzt ist und der Querrille (5) zwei dreieckförmige Endabschnitte (5a') verleiht, welche - jeweils ermittelt am Niveau der Außenfläche (4a) des Schulterabschnittes (4) und bezogen auf die Dreieckspitze (8a) - in Umfangsrichtung eine Breite (b_{E}) von 2,5 mm bis 3,5 mm und quer zur Umfangsrichtung eine Länge (c_{E}) von 3,0 mm bis 7,5 mm, insbesondere von 5,0 mm bis 7,0 mm, aufweisen.

13. Fahrzeugluftreifen nach Anspruch 12, **dadurch gekennzeichnet, dass** die dreieckförmige Erhebung (8) zwei V-förmig zueinander verlaufende Begrenzungsflächen (9) mit je einer gerade oder bogenförmig verlaufenden Begrenzungskante (9a) an der Außenfläche (4a) des Schulterabschnittes (4) aufweist, wobei die Begrenzungskanten (9a) bezüglich der Umfangsrichtung gegensinnig zueinander geneigt sind und miteinander einen Winkel (ε) von 35° bis 55°, insbesondere von 40° bis 50°, einschließen.

14. Fahrzeugluftreifen nach Anspruch 12 oder 13, **dadurch gekennzeichnet, dass** zwischen in Umfangsrichtung aufeinanderfolgenden Querrillen (5) jeweils eine einzige Vertiefung (15) ausgebildet ist, welche zu den Querrillen (5) einen in Umfangsrichtung als kleinstmöglichen Abstand ermittelten Abstand (as) von insbesondere 3,0 mm bis 5,0 mm aufweist.

15. Fahrzeugluftreifen nach einem der Ansprüche 1 bis 14, **dadurch gekennzeichnet, dass** die Breite (bv) der Vertiefungen (15) 0,40 mm bis 1,00 mm beträgt.

## Claims

1. Pneumatic vehicle tyre with a tread and sidewalls, wherein the tread has at least one shoulder-side profile rib (1) with an inner portion (3) located within the ground contact area and a shoulder portion (4) located outside the ground contact area, and has one half (4') adjoining the lateral edge of the ground contact area (line L) and one half (4") adjoining the sidewall, wherein depressions (15) that are successive in the circumferential direction and are elongate over their course are formed in the shoulder portion (4),
**characterized in that**
the depressions (15) are formed in the half (4") of the shoulder portion (4) adjoining the sidewall, run in a V-shaped manner when seen in plan view and each have a tip of the V which points towards the lateral edge of the ground contact area (line L) and two depression portions (15a) which each form a leg of the V and together enclose an angle (η) of 30° to 50°, wherein the depressions (15) have a width (b_{V}) of 0.30 mm to 1.20 mm and the depression portions (15a) have a length (c_{Va}), measured transversely to the circumferential direction, of 3.0 mm to 7.5 mm.

2. Pneumatic vehicle tyre according to Claim 1, **characterized in that** the depressions (15) have a depth (t_{V}) of 0.30 mm to 1.20 mm, in particular of 0.40 mm to 1.00 mm, and preferably of up to 0.80 mm.

3. Pneumatic vehicle tyre according to Claim 1 or 2, **characterized in that** the depressions (15) are formed completely within an outer third (4‴) of the shoulder portion (4) that adjoins the sidewall.

4. Pneumatic vehicle tyre according to one of Claims 1 to 3, **characterized in that** the depression portions (15a) of each depression (15), as viewed in plan view, are inclined in mutually opposite directions with respect to the circumferential direction.

5. Pneumatic vehicle tyre according to one of Claims 1 to 4, **characterized in that** the depression portions (15a) of each depression (15), as viewed in plan view, run so as to be curved in an arcuate and biconvex manner relative to one another.

6. Pneumatic vehicle tyre according to Claim 5, **characterized in that** each depression (15) has a centre line (m_{V}) following its course, and the depression portions (15a) running in an arcuate manner each have an arcuate centre line portion (m_{Va}) of the centre line (m_{V}) of the depression (15), wherein the depression portions (15a) each have a maximum deflection (a_{V}) of 0.30 mm to 1.00 mm, in particular of 0.40 mm to 0.80 mm, wherein the maximum deflection (a_{V}) is determined between the centre line portion (m_{Va}) and an auxiliary line (h₃) running straight between the ends of the centre line portion (m_{Va}) and perpendicularly to the auxiliary line (h₃).

7. Pneumatic vehicle tyre according to one of Claims 1 to 6, **characterized in that** the angle (η) which the two depression portions (15a) each forming a V leg conjointly enclose is 35° to 45°, in particular 37° to 43°

8. Pneumatic vehicle tyre according to one of Claims 1 to 7, **characterized in that** the width (b_{V}) of the depressions (15) is 0.40 mm to 0.80 mm.

9. Pneumatic vehicle tyre according to one of Claims 1 to 8, **characterized in that** the length (c_{Va}) of the depression portions (15a), measured transversely to the circumferential direction, is 5.0 mm to 7.0 mm.

10. Pneumatic vehicle tyre according to one of Claims 1 to 9, **characterized in that** the depression portions (15a) each have a spacing (a₆), determined transversely to the circumferential direction, of 1.0 mm to 3.0 mm from the sidewall.

11. Pneumatic vehicle tyre according to one of Claims 1 to 10, **characterized in that** the depressions (15) at the level of the outer surface (4a) of the shoulder portion (4) have mutual spacings of 3.0 mm to 5.0 mm in the circumferential direction, which spacings are determined as the smallest possible spacings, wherein the depressions (15) are formed so as to be distributed over the entire tread circumference.

12. Pneumatic vehicle tyre according to one of Claims 1 to 11, **characterized in that** the shoulder-side profile rib (1) is provided with transverse grooves (5) which run into the region between depressions (15) that are successive in the circumferential direction, wherein, at the end of each transverse groove (5) facing the sidewall, in the half (4") of the shoulder portion (4) adjoining the sidewall, in particular in the third (4‴) of the shoulder portion (4) adjoining the sidewall, a triangular elevation (8) which projects into the transverse groove (5) and has an in particular radiused triangular tip (8a) pointing in the direction of the lateral periphery of the ground contact area (line L) is formed, wherein the triangular elevation (8) is conjointly delimited by the outer surface (4a) of the shoulder portion (4) and imparts two triangular end portions (5a') to the transverse groove (5), which end portions - determined in each case at the level of the outer surface (4a) of the shoulder portion (4) and with respect to the triangle tip (8a) - have a width (b_{E}) of 2.5 mm to 3.5 mm in the circumferential direction and a length (c_{E}) transverse to the circumferential direction of 3.0 mm to 7.5 mm, in particular of 5.0 mm to 7.0 mm.

13. Pneumatic vehicle tyre according to Claim 12, **characterized in that** the triangular elevation (8) has two boundary surfaces (9) running in a V-shape with respect to one another, each with a boundary edge (9a) running in a straight or arcuate manner on the outer surface (4a) of the shoulder portion (4), wherein the boundary edges (9a) are inclined in mutually opposite directions with respect to the circumferential direction and conjointly enclose an angle (ε) of 35° to 55°, in particular of 40° bis 50°.

14. Pneumatic vehicle tyre according to Claim 12 or 13, **characterized in that** a single depression (15) is formed in each case between transverse grooves (5) that are successive in the circumferential direction, said single depression having a spacing (a₅), determined as the smallest possible spacing in the circumferential direction, of in particular 3.0 mm to 5.0 mm from the transverse grooves (5).

15. Pneumatic vehicle tyre according to one of Claims 1 to 14, **characterized in that** the width (b_{V}) of the depressions (15) is 0.40 mm to 1.00 mm.

## Revendications

1. Pneumatique pour véhicule comprenant une bande de roulement et des flancs, la bande de roulement présentant au moins une nervure de profil d'épaule (1) comportant une section intérieure (3) située dans l'aire de contact au sol et une section d'épaule (4) située hors de l'aire de contact au sol, ladite section d'épaule comprenant une moitié (4') adjacente au bord latéral de l'aire de contact au sol (ligne L) et une moitié (4") adjacente au flanc, des évidements allongés (15) se succédant dans la direction circonférentielle étant formés dans la section d'épaule (4),
**caractérisé**
**en ce que** les évidements (15) sont formés dans la moitié (4") de la section d'épaule (4) adjacente au flanc et présentent, en vue de dessus, une forme en V, chacun comportant une pointe du V dirigée vers le bord latéral de l'aire de contact au sol (ligne L) ainsi que deux portions d'évidement (15a) formant chacune une branche du V et délimitant entre elles un angle (η) de 30° à 50°, les évidements (15) présentant une largeur (b_{V}) de 0,30 mm à 1,20 mm et les portions d'évidement (15a) présentant une longueur (c_{Va}), mesurée transversalement à la direction circonférentielle, de 3,0 mm à 7,5 mm.

2. Pneumatique pour véhicule selon la revendication 1, **caractérisé en ce que** les évidements (15) présentent une profondeur (t_{V}) de 0,30 mm à 1,20 mm, en particulier de 0,40 mm à 1,00 mm et, de préférence, d'au plus 0,80 mm.

3. Pneumatique pour véhicule selon la revendication 1 ou 2, **caractérisé en ce que** les évidements (15) sont entièrement formés dans un tiers extérieur (4‴) de la section d'épaule (4), adjacent au flanc.

4. Pneumatique pour véhicule selon l'une quelconque des revendications 1 à 3, **caractérisé en ce que** les portions d'évidement (15a) de chaque évidement (15) sont, en vue de dessus, inclinées dans des sens opposés l'une par rapport à l'autre par rapport à la direction circonférentielle.

5. Pneumatique pour véhicule selon l'une quelconque des revendications 1 à 4, **caractérisé en ce que** les portions d'évidement (15a) de chaque évidement (15) présentent, en vue de dessus, une forme arquée et sont incurvées de manière biconvexe l'une par rapport à l'autre.

6. Pneumatique pour véhicule selon la revendication 5, **caractérisé en ce que** chaque évidement (15) présente une ligne médiane (m_{V}) suivant son tracé et **en ce que** les portions d'évidement (15a) de forme arquée présentent chacune une portion de ligne médiane (m_{Va}) de forme arquée de la ligne médiane (m_{V}) de l'évidement (15), les portions d'évidement (15a) présentant chacune une déviation maximale (a_{V}) de 0,30 mm à 1,00 mm, en particulier de 0,40 mm à 0,80 mm, la déviation maximale (a_{V}) étant déterminée entre la portion de ligne médiane (m_{Va}) et une ligne auxiliaire droite (h₃) reliant les extrémités de la portion de ligne médiane (m_{Va}), perpendiculairement à ladite ligne auxiliaire (h₃).

7. Pneumatique pour véhicule selon l'une quelconque des revendications 1 à 6, **caractérisé en ce que** l'angle (η) délimité entre les deux portions d'évidement (15a) formant chacune une branche du V est de 35° à 45°, en particulier de 37° à 43°.

8. Pneumatique pour véhicule selon l'une quelconque des revendications 1 à 7, **caractérisé en ce que** la largeur (b_{V}) des évidements (15) est de 0,40 mm à 0,80 mm.

9. Pneumatique pour véhicule selon l'une quelconque des revendications 1 à 8, **caractérisé en ce que** la longueur (c_{Va}) des portions d'évidement (15a), mesurée transversalement à la direction circonférentielle, est de 5,0 mm à 7,0 mm.

10. Pneumatique pour véhicule selon l'une quelconque des revendications 1 à 9, **caractérisé en ce que** les portions d'évidement (15a) présentent chacune, par rapport au flanc, une distance (a₆) de 1,0 mm à 3,0 mm, déterminée transversalement à la direction circonférentielle.

11. Pneumatique pour véhicule selon l'une quelconque des revendications 1 à 10, **caractérisé en ce que** les évidements (15) présentent, au niveau de la surface extérieure (4a) de la section d'épaule (4), des distances les séparant dans la direction circonférentielle, déterminées comme les distances minimales entre eux, de 3,0 mm à 5,0 mm, les évidements (15) étant répartis sur toute la circonférence de la bande de roulement.

12. Pneumatique pour véhicule selon l'une quelconque des revendications 1 à 11, **caractérisé en ce que** la nervure de profil d'épaule (1) est pourvue de rainures transversales (5) qui s'étendent dans la région située entre des évidements (15) successifs dans la direction circonférentielle, une saillie triangulaire (8) faisant saillie dans la rainure transversale (5) et présentant une pointe triangulaire (8a) dirigée vers le bord latéral de l'aire de contact au sol (ligne L), en particulier arrondie, étant formée à l'extrémité de chaque rainure transversale (5) tournée vers le flanc, dans la moitié (4") de la section d'épaule (4) adjacente au flanc, en particulier dans le tiers (4‴) de la section d'épaule (4) adjacent au flanc, la saillie triangulaire (8) étant également délimitée par la surface extérieure (4a) de la section d'épaule (4) et conférant à la rainure transversale (5) deux portions d'extrémité triangulaires (5a') qui présentent chacune - au niveau de la surface extérieure (4a) de la section d'épaule (4) et par rapport à la pointe triangulaire (8a) - une largeur (b_{E}) de 2,5 mm à 3,5 mm dans la direction circonférentielle et une longueur (c_{E}) de 3,0 mm à 7,5 mm transversalement à la direction circonférentielle, en particulier de 5,0 mm à 7,0 mm.

13. Pneumatique pour véhicule selon la revendication 12, **caractérisé en ce que** la saillie triangulaire (8) présente deux surfaces de délimitation (9) disposées en V l'une par rapport à l'autre, chacune comportant une arête de délimitation (9a) rectiligne ou arquée au niveau de la surface extérieure (4a) de la section d'épaule (4), les arêtes de délimitation (9a) étant inclinées dans des sens opposés l'une par rapport à l'autre par rapport à la direction circonférentielle et délimitant entre elles un angle (ε) de 35° à 55°, en particulier de 40° à 50°.

14. Pneumatique pour véhicule selon la revendication 12 ou 13, **caractérisé en ce qu'**un seul évidement (15) est formé entre deux rainures transversales (5) successives dans la direction circonférentielle, ledit évidement présentant, par rapport aux rainures transversales (5), une distance (a₅) déterminée dans la direction circonférentielle comme étant la distance minimale, en particulier de 3,0 mm à 5,0 mm.

15. Pneumatique pour véhicule selon l'une quelconque des revendications 1 à 14, **caractérisé en ce que** la largeur (b_{V}) des évidements (15) est de 0,40 mm à 1,00 mm.
